# EUROPEAN PATENT SPECIFICATION

(11) **EP 0 690 930 B1**
(45) Date of publication and mention of the grant of the patent: **25.10.2000**
(21) Application number: 94909944.4
(22) Date of filing: 17.03.1994
(51) Int. Cl.: C13F 3/00, B02C 19/06

(54) **SUGAR PRODUCT, PROCESS FOR ITS PRODUCTION, AND ITS USE**
ZUCKERPRODUKT, VERFAHREN FÜR SEINE HERSTELLUNG UND SEINE VERWENDUNG
PRODUIT SUCRE, SON PROCEDE DE PREPARATION ET SON APPLICATION

(30) Priority: 19.03.1993 FI 931231
(43) Date of publication of application: 10.01.1996
(73) Proprietor: Sohkar Oy, 02150 Espoo (FI)
(72) Inventor: YLI-KYYNY, Mauri, FIN-00960 Helsinki (FI); ORAVAINEN, Juha, FIN-31600 Jokioinen (FI); TIAINEN, Ilkka, FIN-00200 Helsinki (FI)
(74) Representative: Hansen, Bernd, Dr. Dipl.-Chem.
(86) International application number: FI9400099
(87) International publication number: WO9421826

(56) References cited:
- EP-A- 0 007 037
- WO-A-87/06854
- US-A- 3 140 201
- US-A- 3 544 328
- US-A- 4 019 688
- US-A- 4 918 182

## Description

The present invention relates to a fine sugar product obtained by comminuting sucrose or a sucrose-containing mixture to a mean particle size of 5 to 25 µm, a process for its production by counterjet milling and classification, and its use in icings, in the confectionery industry, specifically in chocolates, and as seed crystals in the sugar industry. The invention also relates to products prepared using this fine sugar product.

In many applications of sugar, the sugar must be very fine and also have a very uniform particle size. It is required of many ingested sweet products, such as chocolate, that organoleptically they have a velvet-smooth mouth feel. This calls for a very small particle size of the sugar and other solid ingredients in said products. Thus, for example in finished chocolate the proportion of sugar grains having a size exceeding 30 µm must be below 5% in order for the chocolate not to appear coarse to the tongue. This also applies to fondants employed for instance as coatings on bakery products and biscuit products (such as icings for iced doughnuts and gingerbread) and in confectionery fillings.

Sugar having a grain size in the range 10 µm - 1 mm can be used to prepare chocolate when the production process is selected in accordance with the grain size. If the chocolate is produced by a process comprising mixing, rolling and conching of the ingredients, one rolling step, i.e. roll refining, is sufficient if the particle size of the sugar is less than 200 µm. In order for it to be possible to entirely omit the refining, the particle size of the sugar must be less than about 20 µm. In another chocolate process that is commonly used, a crumb-like prefabricate is prepared from part of the ingredients by heating them in the presence of water and evaporating the water; this prefabricate is called the crumb (cf. e.g. Minifie, B.W., *Chocolate, Cocoa and Confectionery: Science and Technology,* Second edition, AVI Publishing Company, Inc., Westport, pp. 108-113). The crumb is mixed with the other chocolate ingredients, refined, and conched. Also in this case the refining may be omitted, if the crumb is comminuted to sufficient fineness prior to the addition of the other ingredients.

Fondants may be either wet fondants or dry fondants. Wet fondants comprise two phases: a solid phase formed by fine sugar and a syrup forming a liquid phase and comprising sugar solids in high concentration. Wet fondants are produced either by cooling crystallization of the product into paste form or by adding the necessary liquid phase to a dry fondant. The production of fondant and the problems associated with the storage of wet fondant have been discussed for instance in Lees, L. & Jackson, E.B., *Sugar Confectionery and Chocolate Manufacture,* Leonard Hill, 1973, in the section Fondants, Creams and Crystallized Confectionery (pp. 211-215). Storage problems are avoided by using dry fondants wherefrom a wet fondant may be prepared if desired, as stated previously. The conventional dry fondants comprise very fine sugar whereto a small amount of a polysaccharide doctoring/controlling the crystallization, and possibly also fat, has been added.

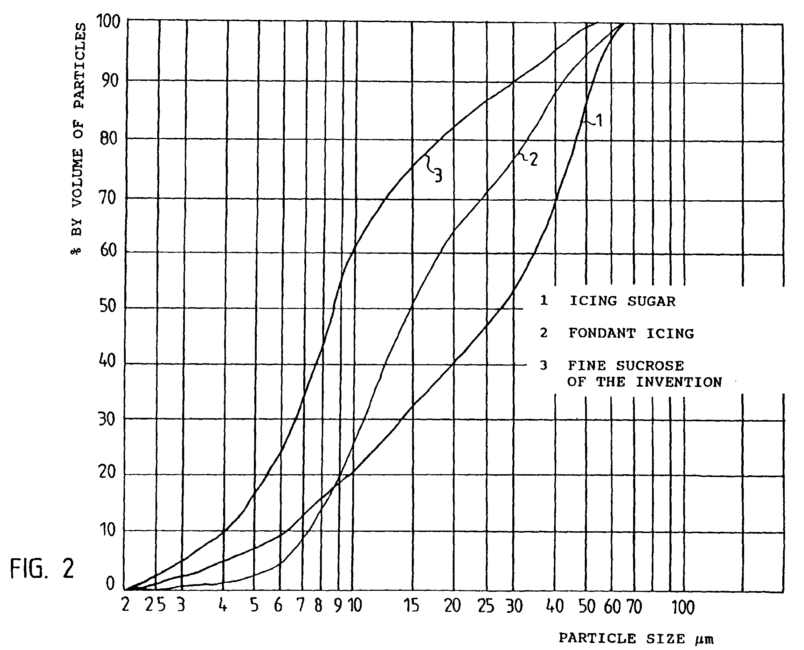

By the conventional grinding methods it is in fact possible to prepare from sucrose a ground product having a sufficiently small particle size and narrow size distribution for use in chocolate production without roller refining and for the production of fondants. However, the amount of the product having sufficient fineness obtained by these grinding methods is rather small and its recovery by classification is disadvantageous. An example of the particle size distribution of a typical commercial icing sugar is curve 1 shown in Figure 2. It is to be seen from the curve that said product, having a mean particle size of 28 µm, comprises about 30% by volume of particles having a size of 40 µm or larger. Commercially are also available fine sucrose grades suitable for the production of fondants. The quality of these, however, is inadequate; the drawback is often non-uniform particle size distribution. Curve 2 in Figure 2 illustrates the particle size distribution of a product available under the trade name Fondant icing (manufacturer Tate & Lyle Public Limited Company, London).

In addition to the above drawbacks, very fine sucrose produced by the conventional grinding methods is attended by decided disadvantages resulting from the fact that when crystalline sucrose is crushed into a very small particle size, it changes largely into amorphous form, which is an unstable state. Small sucrose particles in this form very strongly absorb flavours from all materials (e.g. the grinding machinery, air) with which they come into contact. Further, they have a strong tendency to adhere to each other, which results in clodding of the product. Absorption of flavours produces an off-flavour in the product: in a fine product of this kind, an unpleasant, often metallic and/or stale flavour is present. This off-flavour is often masked by using flavour-improving additives (which for instance in fondants may simultaneously be dyes); to some extent, however, it restricts the use of the product. On account of the clodding tendency, additives preventing clodding must usually be provided in such fine products.

A solid dry material can be ground to a very fine particle size in a counterjet mill wherein the particles to be comminuted that are fluidized in a carrier gas, typically air, are conveyed so as to collide with one another at a high speed. Advantageously, a classifier wherein the ground material is classified into fractions of varying particle sizes is provided in connection with the mill. Such apparatus and processes have been disclosed in several patent publications, for instance in Finnish Patents 62 235, 72 896, 72 897, 74 222, 77 580, 77 168 and 80 617, and they have been implemented mainly to industrial minerals and pigments that are difficult to grind. Finnish Patent Application 883405 discloses the comminution of cereal flour in a counterjet mill and classifier. Finnish Patent 85 145 disclosed the comminution of a crystalline sweetener, sucralose, in a jet mill to a maximum mean particle size of 10 µm, the largest particle size being not more than twice the mean particle size. The significance of grinding has been dealt with in Eynck, V., "Dry Mixing System in Manufacture of Confectioner Coating", *The Manufacturing Confectioner,* October 1986, pp. 57-59.

Oy Finnpulva At has developed fine-grinding apparatus and technology, which according to Oy Finnpulva Ab's brochure "FINE, FINER, FINNPULVA^{R}" are suitable for producing fine powders for the construction material, chemical, mining and extractive, food, fodder and pharmaceutical industry and biotechnology. Applying said technology, tests were started for the fine grinding of sucrose on industrial scale. Dried, and respectively cooled, compressed air was employed as the carrier gas. In that connection, very difficult problems were presented by clodding and vaulting of the sucrose, and the method was not suitable for industrial production. Furthermore, the ground product had the above-described off-flavour typical of fine sucrose ground by the conventional methods.

In the initial tests, clodding very rapidly caused blockage of the apparatus, wherefore changes were made in the apparatus to optimize it for the grinding of sucrose. It was further found that the grinding parameters which had been given by the manufacturer and which had been suitable for other materials ground by this technique were not suitable for the grinding of sugar, but a change of the crystalline sucrose used as the raw material into amorphous state took place during the milling, which was largely the reason for said clodding problems and off-flavour.

In further tests it was found that by suitable regulation of the temperature and pressure of the air employed as a carrier gas in the milling, clodding of the product could be avoided, and the off-flavour was also considerably less or there was no off-flavour. When heated air is used as a carrier gas instead of cooled air, the amorphous state of sucrose is cancelled by the effect of heat, and thus the reformed crystalline state remains readily flowable and does not absorb flavours. The change of amorphous sucrose into crystalline sucrose could also be improved by post-treating the ground sucrose hot, for instance in a screw mixer.

Furthermore, it was found that the problem of clodding and vaulting could be avoided or remarkably diminished and the production capacity of the mill incresed by adding native starch, dried starch syrup or hydrolysed starch to the sugar to be ground.

The object of the present invention is to provide a fine sugar product having a particle size and particle size distribution suitable for use in the production of chocolate and fondants without additional refining, and being simple and cost-effective to produce. It is a further object of the invention to provide such a fine sugar product which has markedly better flavour characteristics than the previously available ground sugar products, and wherewith the use of chemical anti-clodding agents such as tricalcium phosphate can be eliminated totally or in part.

These objects are achieved with the substantially dry, substantially free-flowing fine product of the invention comprising sucrose or a sucrose-containing mixture, being characterized in that it is prepared by grinding the crystalline sucrose or mixture containing crystalline sucrose substantially autogenously in a counterjet mill employing as a carrier gas air heated to 40 - 120°C the pressure of which is regulated to minimize formation of amorphous sucrose, and classifying the ground product to a mean particle size of 5-25 µm.

The invention also relates to a process for producing the above fine product, being characterized in that the crystalline sucrose or substantially dry granular mixture containing crystalline sucrose is ground substantially autogenously in a counterjet mill employing as a carrier gas air heated to 40 - 120°C the pressure of which is regulated to minimize formation of amorphous sucrose, and the ground product is classified to give a product having a mean particle size of 5-25 µm.

With air heated to 40-120°C as the carrier gas, sucrose has been found to remain substantially in crystalline state.

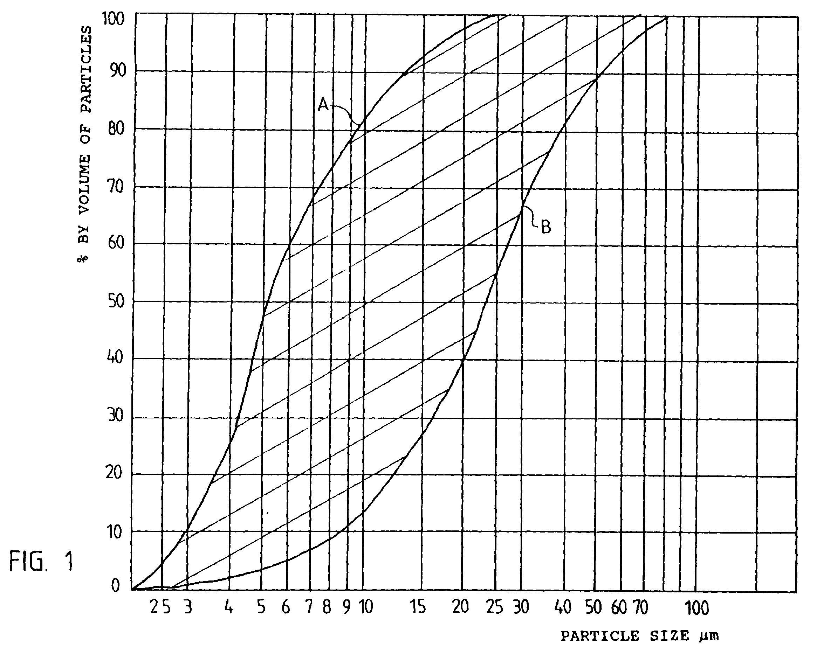

The particle size distribution of the fine sucrose or sucrose-containing mixture produced in accordance with the invention as determined by the PMT - PAMAS method is advantageously in the range defined by curves A and B in Figure 1. When the mean particle size is 5 µm, preferably a maximum of 50% of the particles have a size below 5 µm and a maximum of 20% above 10 µm. When the mean particle size is 25 µm, preferably a maximum of 15% of the particles have a size below 10 µm and a maximum of 20% above 40 µm.

The ground product is preferably divided in the classifier into two fractions, the coarser of which can be recycled into the mill or used as such for a suitable purpose. The product according to the invention, having a mean particle size of 5-25 µm, is recovered as the finer fraction.

When crystalline sucrose was ground by the process of the invention, a product with a particle size distribution as shown in curve 3 in Figure 2 was obtained.

In a preferred embodiment of the invention, sugar is ground in admixture with native starch, dried starch syrup or starch hydrolysate. These are ingredients often mixed with fine sugar to prepare traditional fondants. Thus, an extra mixing step of fine materials can be avoided when these ingredients are ground concurrently with crystalline sucrose.

Native starch effectively diminishes the clodding and vaulting problems and increases the production capacity of the mill when used in amounts of from 2 to 10%, preferably about 3 to 4% by weight of the mixture.

With the process of the invention, a dry fondant can also be advantageously prepared by concurrent grinding of crystalline sucrose and dried starch syrup or hydrolysed starch, such as maltodextrin, having a dextrose equivalent in excess of 10, preferably 20 to 40. The proportion of dried starch syrup or hydrolysed starch in such a dry fondant can be for example 5-15%.

Preferred embodiments of the invention include dry fondants having e.g. the following basic composition:

| | | |
|---|---|---|
| 1) | sucrose | 90-92% |
| | dried starch syrup, DE 28-36 | 8-10% |
| 2) | sucrose | 90-94% |
| | crystalline fructose | 3-5% |
| | crystalline glucose anhydride | 3-5% |

A wet fondant can be prepared from the dry fondant of the invention simply by mixing the dry fondant in a suitable liquid portion.

The process of the invention is also suitable for grinding a crumb employed in chocolate production, the fine premix obtained being useful for chocolate production without roll refining.

The most preferred temperature of air employed as a carrier gas in the grinding is dependent on the material to be ground. In the grinding of sucrose, the temperature of the carrier gas is preferably 50-100°C. If the material to be ground contains fructose, the temperature is preferably 50-80°C.

The pressure of the carrier gas employed in the process of the invention is selected to be suitable for the construction of the mill employed and the material to be ground in each case. It can vary for instance in the range 150 000-500 000 Pa (1.5-5 bar. For sucrose, a pressure of about 200 000-450 000 Pa (2-4.5 bar) has been found preferable.

The fine sugar product prepared in accordance with the invention is suitable for the production of chocolate and icings without roll refining. It can also be used in the production of chewing-gums, e.g. dusting gum sticks, and fillings, e.g. fillings for chocolate and truffles. Further, a wet fondant can be prepared therefrom and used for various fillings and coatings in bakery products, particularly biscuits, Danish pastries, cakes and doughnuts. The fine sucrose ground in accordance with the invention is also suitable for use as seed crystals in the sugar industry and in the production of confectionery.

The process of the invention can be carried out as a continuous process. It also enables for instance in chocolate production a continuous, integrated process from the grinding of the starting materials right down to the forming of the final product, since no rolling steps are needed.

The following advantages, for example, are achieved with the process of the invention:
- by means of the grinding parameters, the need for anti-clodding agents can be minimized,
- the particle size can be easily controlled, so that the organoleptic feel of the product is agreeably smooth,
- the grinding is substantially autogenous, that is, the material to be comminuted will only come into contact with foreign materials to a very small degree and thus contamination will remain low,
- the air employed as a carrier gas can be regulated to be specifically suited to the product,
- the product obtained is pure in taste and colour.

The invention will be illustrated in greater detail by means of the following examples, which are not intended to restrict the scope of the invention.

### Example 1

### Grinding of sucrose

A) Sucrose was ground using as raw materials crystalline products having mean particle sizes of 0.33±0.03 mm and 0.50±0.05 mm. The sucrose was ground and classified in a counterjet mill FP4 and a dynamic rotor classifier FPC20R manufactured by Oy Finnpulva Ab, in which improvements had been made to optimize them for grinding of sucrose. The crystalline sucrose employed as the raw material was fluidized in carrier air in a pressurized chamber, and the fluidized mixture obtained was accelerated in mill jets wherefrom it was conveyed to a milling chamber. The temperature of the carrier gas in the fluidizing and acceleration steps was about 80°C, the feed pressure about 4 bar.
B) The sucrose grinding tests were continued following the process as outlined in item A, except that the temperature of the carrier gas was about 60°C and the feed pressure to be used in each test was selected from the range 4-5 bar.

The particle size distribution of the sucrose powder thus obtained, as defined by the PMT - PAMAS method, is shown by curve 3 in Figure 2. The sucrose powder obtained was readily flowable, and no clodding problems were encountered in the grinding and classification. The product had a pure sugar taste.

### Example 2

### Dry fondant

A mixture of crystalline sucrose and dried starch syrup (starch hydrolysate having a dextrose equivalent of 36-39, dry solids content ≥94%) comprising 90% of sucrose and 10% of dried starch syrup, was ground following the process as outlined in Example 1. The temperature of the carrier gas in the fluidizing and acceleration steps was 80°C and the feed pressure 5 bar. The coarse fraction obtained from the classifier was returned to the mill; the recycling load was twice the feed.

To optimize the flow of the product, different dry fondants were prepared using different starch hydrolysates and different mixture ratios. The mouth feel and taste of the resultant products was better than with the commercially available product.

### Example 3

### Truffle

Truffle is prepared employing the following ingredients:

| | |
|---|---|
| Dry fondant of the invention | 32.0% |
| Water | 4.0% |
| Dark or milk chocolate | 54.5% |
| Butter | 9.0% |
| Lecithin | 0.5% |

The dry fondant and water are stirred together for example in a Hobart mixer, and the melted chocolate and butter at 35-40°C and lecithin are added into the mixer.

The mixture is whipped to have a suitable fluffy consistency and spread for example on baking paper coated with cocoa powder, or extruded into moulds with a pastry bag. The mixture is allowed to crystallize for 1-2 hours.

Flavour variation is achieved by adding for instance nuts, raisins, dried fruit and/or rum or liqueur aromas.

## Claims

1. A substantially dry, substantially free-flowing fine product comprising sucrose or a mixture of sucrose and native starch, dried starch syrup or starch hydrolysate, *characterized* in that it is obtainable by grinding the crystalline sucrose or a substantially dry mixture containing crystalline sucrose and native starch, dried starch syrup or starch hydrolysate substantially autogenously in a counterjet mill employing as a carrier gas air heated to 40-120°C the pressure of which is regulated to minimize formation of amorphous sucrose, and classifying the ground product to a mean particle size of 5-25 µm.

2. A product as claimed in claim 1, *characterized* in that it has been ground employing air heated to 50-100°C as the carrier gas.

3. A product as claimed in claim 1 or 2, **characterized** in that its particle size distribution is in the range defined by curves A and B in Figure 1.

4. A product as claimed in any one of claims 1-3, **characterized** in that it has a mean particle size of 5 µm and a maximum of 50% of the particles have a size below 5 µm and a maximum of 20% above 10 µm.

5. A product as claimed in any one of claims 1-3, **characterized** in that it has a mean particle size of 25 µm and a maximum of 15% of the particles have a size below 10 µm and a maximum of 20% above 40 µm.

6. A product as claimed in any one of claims 1-5, **characterized** in that it comprises sucrose.

7. A product as claimed in claim 6, **characterized** in that the majority of the sucrose is in crystalline form.

8. A product as claimed in claim 6 or 7, **characterized** in that is particle size distribution complies in shape substantially with curve 3 in Figure 2.

9. A product as claimed in any one of claims 1-5, **characterized** in that it comprises sucrose and native starch, dried starch syrup or hydrolysed starch, such as maltodextrin.

10. A product as claimed in claim 9, **characterized** in that it comprises 80-98%, preferably 96-97%, of sucrose and 2-10%, preferably 3-4%, of native starch.

11. A product as claimed in claim 9, **characterized** in that it comprises 85-95%, preferably 90-92%, of sucrose and 5-15%, preferably 8-10%, of dried starch syrup or hydrolysed starch.

12. A process for preparing a substantially dry, substantially free-flowing fine product comprising sucrose or a sucrose-containing mixture, *characterized* in that the crystalline sucrose or substantially dry granular mixture containing crystalline sucrose is ground substantially autogenously in a counterjet mill employing as a carrier gas air heated to 40-120°C the pressure of which is regulated to minimize formation of amorphous sucrose, and the ground product is classified to give a product having a mean particle size of 5-25 µm.

13. A process as claimed in claim 12, *characterized* in that air heated to 50-100°C is employed as the carrier gas.

14. A process as claimed in claim 12 or 13, **characterized** in that the particle size distribution of the ground and classified product is in the range defined by curves A and B in Figure 1.

15. A process as claimed in any one of claims 12-14, **characterized** in that the pressure of the carrier gas is 150 000-500 000 Pa (1.5-5 bar).

16. A process as claimed in any one of claims 12-15, **characterized** in that the crystalline sucrose is ground employing a carrier gas having a temperature of 50-100°C.

17. A process as claimed in any one of claims 12-15, **characterized** in that a dry fondant is prepared by grinding crystalline sucrose in combination with native starch, dried starch syrup and/or glucose and fructose substantially autogenously in a counterjet mill employing as a carrier gas air heated to 50-80°C, and classifying the ground product to give a product having a mean particle size of 5-25 µm.

18. Use of a product as claimed in any one of claims 1-11 to prepare chocolate, icing and chocolate spreads.

19. Use as claimed in claim 18, **characterized** in that the chocolate is produced without roll refining.

20. Use of a product as claimed in any one of claims 1-11 to prepare a chocolate or truffly filling.

21. Use of a product as claimed in any one of claims 1-11 to prepare chewing-gum or dusting gum sticks.

22. Use of a product as claimed in any one of claims 1-11 for fillings and coatings of bakery products, particularly biscuits, Danish pastries, cakes and doughnuts.

23. Use of a product as claimed in any one of claims 6-8 as seed crystals in the sugar industry in the production of sucrose.

24. Use of a product as claimed in any one of claims 1-11 to prepare a fondant.

25. Use as claimed in claim 24, **characterized** in that the fondant is a dry fondant optionally containing fat.

26. Use as claimed in claim 24, **characterized** in that the fondant is a wet fondant.

## Patentansprüche

1. Ein im wesentlichen trockenes und freifließendes feines Produkt umfassend Sucrose oder eine Mischung aus Sucrose und nativer Stärke, getrocknetem Stärkesirup oder Stärkehydrolysat, dadurch gekennzeichnet, dass es erhältlich ist durch Mahlen von kristalliner Sucrose oder einer im wesentlichen trockenen Mischung enthaltend kristalline Sucrose und native Stärke, getrockneten Stärkesirup oder Stärkehydrolysat, wobei das Mahlen im wesentlichen autogen in einer Strahlmühle (counterjet mill) unter Verwendung von auf 40-120°C erwärmter Luft als Trägergas, deren Druck geregelt wird, um die Bildung von amorpher Sucrose zu minimieren, und Sieben des gemahlenen Produktes auf eine durchschnittliche Partikelgröße von 5-25 µm.

2. Produkt gemäß Anspruch 1, dadurch gekennzeichnet, dass es gemahlen wird unter Verwendung von auf 50-100°C vorgeheizter Luft als Trägergas.

3. Produkt gemäß Anspruch 1 oder 2, dadurch gekennzeichnet, dass die Partikelgrößenverteilung in den durch die Kurven A und B definierten Bereichen in Figur 1 liegt.

4. Produkt gemäß einem der Ansprüche 1 bis 3, dadurch gekennzeichnet, dass es eine mittlere Partikelgröße von 5 µm aufweist, und dass maximal 50% der Partikel eine Größe unterhalb von 5 µm und maximal 20% oberhalb von 10 µm aufweisen.

5. Produkt gemäß einem der Ansprüche 1 bis 3, dadurch gekennzeichnet, dass es eine mittlere Partikelgröße von 25 µm aufweist, und dass maximal 15% der Partikel eine Größe unterhalb von 10 µm und maximal 20% oberhalb von 40 µm aufweisen.

6. Produkt gemäß einem der Ansprüche 1 bis 5, dadurch gekennzeichnet, dass es Sucrose umfasst.

7. Produkt gemäß Anspruch 6, dadurch gekennzeichnet, dass der Großteil der Sucrose in kristalliner Form vorliegt.

8. Produkt gemäß Anspruch 6 oder 7, dadurch gekennzeichnet, dass die Partikelgrößenverteilung in ihrer Form im wesentlichen Kurve 3 in Figur 2 folgt.

9. Produkt gemäß einem der Ansprüche 1 bis 5, dadurch gekennzeichnet, dass es Sucrose und native Stärke, getrockneten Stärkesirup oder hydrolysierte Stärke, wie Maltodextrin, umfasst.

10. Produkt gemäß Anspruch 9, dadurch gekennzeichnet, dass es 80-98%, vorzugsweise 96-97%, Sucrose und 2-10%, vorzugsweise 3-4%, native Stärke umfasst.

11. Produkt gemäß Anspruch 9, dadurch gekennzeichnet, dass es 85-95%, vorzugsweise 90-92%, Sucrose und 5-15%, vorzugsweise 8-10%, getrockneten Stärkesirup oder hydrolysierte Stärke umfasst.

12. Verfahren zur Herstellung eines im wesentlichen trockenen und freifließenden feinen Produkts umfassend Sucrose oder eine Sucrose-haltige Mischung, dadurch gekennzeichnet, dass kristalline Sucrose oder eine im wesentlichen trockene granulare Mischung enthaltend kristalline Sucrose, im wesentlichen autogen in einer Strahlmühle (counterjet mill) unter Verwendung von auf 40-120°C erhitzter Luft als Trägergas, deren Druck so eingestellt wird, dass die Bildung von amorpher Sucrose minimiert wird gemahlen wird, und dass das gemahlene Produkt gesiebt wird, um ein Produkt mit einer mittleren Partikelgröße von 5-25 µm zu erhalten.

13. Verfahren gemäß Anspruch 12, dadurch gekennzeichnet, dass als Trägergas Luft verwendet wird, die auf 50-100°C erwärmt wurde.

14. Verfahren gemäß Anspruch 12 oder 13, dadurch gekennzeichnet, dass die Partikelgrößenverteilung des gemahlenen und gesiebten Produkts in dem durch die Kurven A und B in Figur 1 definierten Bereich liegt.

15. Verfahren gemäß einem der Ansprüche 12 bis 14, dadurch gekennzeichnet, dass der Druck des Trägergases 150.000-500.000 Pa (1,5-5 bar) beträgt.

16. Verfahren gemäß einem der Ansprüche 12 bis 15, dadurch gekennzeichnet, dass die kristalline Sucrose unter Verwendung eines Trägergases mit einer Temperatur von 50-100°C gemahlen wird.

17. Verfahren gemäß einem der Ansprüche 12 bis 15, dadurch gekennzeichnet, dass ein trockenes Fondant hergestellt wird durch Mahlen von kristalliner Sucrose in Kombination mit nativer Stärke, getrocknetem Stärkesirup und/oder Glucose und Fructose, wobei das Mahlen im wesentlichen autogen in einer Strahlmühle (counterjet mill) unter Verwendung von auf 50-80°C erwärmter Luft als Trägergas erfolgt und Sieben des gemahlenen Produktes, um ein Produkt mit einer mittleren Partikelgröße von 5-25 µm zu erhalten.

18. Verwendung eines Produkts gemäß einem der Ansprüche 1 bis 11 zur Herstellung von Schokolade, Zuckerguss und Schokoladenaufstrichen.

19. Verwendung gemäß Anspruch 18, dadurch gekennzeichnet, dass die Schokolade ohne Walzen hergestellt wird.

20. Verwendung eines Produkts gemäß einem der Ansprüche 1 bis 11 zur Herstellung von Schokolade oder Trüffelfüllungen.

21. Verwendung eines Produkts gemäß einem der Ansprüche 1 bis 11 zur Herstellung von Kaugummi oder zur Bestäubung von Kaugummistreifen.

22. Verwendung eines Produkts gemäß einem der Ansprüche 1 bis 11 zur Füllung und Glasur von Bäckereierzeugnissen, insbesondere Keksen, Danish Pastries, Kuchen und Doughnuts.

23. Verwendung eines Produkts gemäß einem der Ansprüche 6 bis 8 als Impfkristalle in der Zuckerindustrie bei der Herstellung von Sucrose.

24. Verwendung eines Produkts gemäß einem der Ansprüche 1 bis 11 zur Herstellung eines Fondants.

25. Verwendung gemäß Anspruch 24, dadurch gekennzeichnet, dass das Fondant ein trockenes Fondant ist, das optional Fett enthält.

26. Verwendung gemäß Anspruch 24, dadurch gekennzeichnet, dass das Fondant ein feuchtes Fondant ist.

## Revendications

1. Produit fin pratiquement sec, s'écoulant pratiquement librement comprenant du saccharose ou un mélange de saccharose et d'amidon naturel, de sirop d'amidon séché ou d'hydrolysat d'amidon, caractérisé en ce qu'il peut être obtenu en broyant le saccharose cristallin ou un mélange pratiquement sec contenant du saccharose cristallin et de l'amidon naturel, du sirop d'amidon séché ou de l'hydrolysat d'amidon de façon pratiquement autogène dans un broyeur à jets contraires utilisant en tant que gaz porteur de l'air chauffé de 40 à 120 °C, dont la pression est régulée afin de minimiser la formation de saccharose amorphe, et en classant le produit broyé à une granulométrie moyenne de 5 à 25 µm.

2. Produit selon la revendication 1, caractérisé en ce qu'il a été broyé en employant de l'air chauffé de 50 à 100 °C en tant que gaz porteur.

3. Produit selon la revendication 1 ou 2, caractérisé en ce que sa distribution granulométrique se situe dans la plage définie par des courbes A et B de la figure 1.

4. Produit selon l'une quelconque des revendications 1 à 3, caractérisé en ce qu'il présente une granulométrie moyenne de 5 µm et qu'un maximum de 50 % des particules présente une dimension au-dessous de 5 µm et un maximum de 20 % au-dessus de 10 µm.

5. Produit selon l'une quelconque des revendications 1 à 3, caractérisé en ce qu'il présente une granulométrie moyenne de 25 µm et qu'un maximum de 15 % des particules présente une dimension au-dessous de 10 µm et un maximum de 20 % au-dessus de 40 µm.

6. Produit selon l'une quelconque des revendications 1 à 5, caractérisé en ce qu'il comprend du saccharose.

7. Produit selon la revendication 6, caractérisé en ce que la majorité du saccharose se trouve sous forme cristalline.

8. Produit selon la revendication 6 ou 7, caractérisé en ce que sa distribution granulométrique présente une forme qui correspond pratiquement à la courbe 3 de la figure 2.

9. Produit selon l'une quelconque des revendications 1 à 5, caractérisé en ce qu'il comprend du saccharose et de l'amidon naturel, du sirop d'amidon séché ou de l'amidon hydrolysé, tel que la maltodextrine.

10. Produit selon la revendication 9, caractérisé en ce qu'il comprend de 80 à 98 %, de préférence de 96 à 97 %, de saccharose et de 2 à 10 %, de préférence de 3 à 4 %, d'amidon naturel.

11. Produit selon la revendication 9, caractérisé en ce qu'il comprend de 85 à 95 %, de préférence de 90 à 92 %, de saccharose et de 5 à 15 %, de préférence de 8 à 10 %, de sirop d'amidon séché ou d'amidon hydrolysé.

12. Procédé de préparation d'un produit fin pratiquement sec s'écoulant pratiquement librement comprenant du saccharose ou un mélange contenant du saccharose, caractérisé en ce que le saccharose cristallin ou le mélange granulaire pratiquement sec contenant du saccharose cristallin est broyé de façon pratiquement autogène dans un broyeur à jets contraires employant en tant que gaz porteur de l'air chauffé de 40 à 120 °C dont la pression est régulée afin de minimiser la formation de saccharose amorphe, et le produit broyé est classé pour donner un produit présentant une granulométrie moyenne de 5 à 25 µm.

13. Procédé selon la revendication 12, caractérisé en ce que de l'air chauffé de 50 à 100 °C est employé en tant que gaz porteur.

14. Procédé selon la revendication 12 ou 13, caractérisé en ce que la distribution granulométrique du produit broyé et classé se situe dans la plage définie par des courbes A et B de la figure 1.

15. Procédé selon l'une quelconque des revendications 12 a 14, caractérisé en ce que la pression du gaz porteur est de 150 000 à 500 000 Pa (1,5 à 5 bars).

16. Procédé selon l'une quelconque des revendications 12 a 15, caractérisé en ce que le saccharose cristallin est broyé en employant un gaz porteur présentant une température de 50 à 100 °C.

17. Procédé selon l'une quelconque des revendications 12 à 15, caractérisé en ce qu'un fondant sec est préparé en broyant du saccharose cristallin en combinaison avec de l'amidon naturel, du sirop d'amidon séché et/ou du glucose et du fructose de façon pratiquement autogène dans un broyeur à jets contraires employant en tant que gaz porteur de l'air chauffé de 50 à 80 °C, et en classant le produit broyé pour donner un produit présentant une granulométrie moyenne de 5 à 25 µm.

18. Utilisation d'un produit selon l'une quelconque des revendications 1 à 11 en vue de préparer du chocolat, du glaçage, et des pâtes à tartiner au chocolat.

19. Utilisation selon la revendication 18, caractérisé en ce que le chocolat est produit sans raffinage au laminoir.

20. Utilisation d'un produit selon l'une quelconque des revendications 1 à 11 en vue de préparer un chocolat ou un garnissage de truffes.

21. Utilisation d'un produit selon l'une quelconque des revendications 1 à 11 en vue de préparer des tablettes de gomme à mâcher ou de gomme de saupoudrage.

22. Utilisation d'un produit selon l'une quelconque des revendications 1 à 11 destiné à des garnissages et des enrobages de produits de boulangerie, en particulier des biscuits, des pâtisseries danoises, des gâteaux et des beignets.

23. Utilisation d'un produit selon l'une quelconque des revendications 6 à 8 en tant que cristaux d'ensemencement dans l'industrie sucrière pour la production de saccharose.

24. Utilisation d'un produit selon l'une quelconque des revendications 1 à 11 en vue de préparer un fondant.

25. Utilisation selon la revendication 24, caractérisé en ce que le fondant est un fondant sec contenant de façon facultative des matières grasses.

26. Utilisation selon la revendication 24, caractérisé en ce que le fondant est un fondant humide.
